# EUROPEAN PATENT SPECIFICATION

(11) **EP 0 832 914 B1**
(45) Date of publication and mention of the grant of the patent: **24.04.2002**
(21) Application number: 97116913.1
(22) Date of filing: 30.09.1997
(51) Int. Cl.: C08J 3/20, C08K 3/04, B29B 7/42, B01F 15/00

(54) **Method for continuous preparation of silicone rubber base**
Verfahren zur kontinuierlichem Herstellung von Silikongummizusammensetzung
Méthode pour la préparation en continu de caoutchouc de silicone

(30) Priority: 30.09.1996 JP 28036296; 09.06.1997 JP 16661097
(43) Date of publication of application: 01.04.1998
(73) Proprietor: Dow Corning Toray Silicone Company Limited, Tokyo (JP)
(72) Inventor: Hamada, Mitsuo, 2-2, Chigusa Kaigan, Ichihara-shi, Chiba (JP); Ishida, Koichi, 2-2, Chigusa Kaigan, Ichihara-shi, Chiba (JP); Komatsu, Atsushi, 2-2, Chigusa Kaigan, Ichihara-shi, Chiba (JP); Kurusa, Hidetoshi, 2-2, Chigusa Kaigan, Ichihara-shi, Chiba (JP); Mori, Hideyuki, 2-2, Chigusa Kaigan, Ichihara-shi, Chiba (JP); Yamadera, Toyohiko, 2-2, Chigusa Kaigan, Ichihara-shi, Chiba (JP)
(74) Representative: Sternagel, Fleischer, Godemeyer & Partner Patentanwälte

(56) References cited:
- EP-A- 0 558 045
- EP-A- 0 688 598
- EP-A- 0 739 652

## Description

This invention relates to a method for the continuous preparation of silicone rubber bases.

Silicone rubber compositions that cure by hydrosilylation reaction to yield colored or electrically conductive silicone rubbers are already known. These compounds are used in the electronic, construction, and mechanical sectors. An electrically conductive silicone rubber base is the base ingredient of electrically conductive silicone rubber compounds and is prepared from a set of ingredients consisting of alkenyl-functional polyorganosiloxane, conductive filler, and optionally nonconductive inorganic filler.

In a typical batch scheme, these precursors are introduced into a mixer, such as a twin-blade kneader or dough mixer, Henschel™ mixer, or planetary mixer, and are mixed to homogeneity. A continuous production method is also available in which the precursors are continuously introduced into the twin-screw extruder of U.S. Patent 4,649,005, and are also continuously discharged therefrom. The batch methodology suffers from problems such as a low productivity, high equipment costs, and poor ability to achieve the homogeneous dispersion of conductive fillers like carbon black. Moreover, achieving homogeneous dispersion of a conductive filler is more difficult even with the continuous method.

Similarly, U. S. Patent 5,599,102 discloses a continuous mixing apparatus for blending a liquid with a powder, but does not disclose suitable conditions by which a conductive filler uniformly blended into a fluid silicone polymer.

The object of the present invention is to provide a highly productive method for preparing silicone rubber bases that uses a simple apparatus and offers an excellent dispersing performance. This object is achieved by continuously supplying to a continuous mixing apparatus
(A) 100 weight parts of polyorganosiloxane that has a viscosity at 25°C of 100 to 500,000 mPa·s and has at least two silicon-bonded alkenyl groups per molecule;
(B) 0.1 to 700 weight parts of electrically conductive inorganic filler with a surface area of at least 0.5 m²/g
   wherein the combined quantity of components (B) and (C) is 5 to 700 weight parts
(C) 0 to 200 weight parts of electrically nonconductive inorganic filler;
wherein the continuous mixing apparatus comprises a cylindrical body casing having a material feed opening at the top of said casing, a mixture discharge outlet at the bottom of said casing, and a rotating disk within said casing such that the ratio of the diameter of the rotating disk to the inside diameter of the said casing is 0.80 to 0.95;
mixing components (A ) through (C) by rotation of said disk to form a mixture; and then
discharging said mixture through said discharge outlet.

The polyorganosiloxane (A) has at least two silicon-bonded alkenyl groups per molecule in order for curing to occur. The alkenyl groups are exemplified by vinyl, allyl, or propenyl. The non-alkenyl organic groups in this component are alkyl, including methyl, ethyl, and propyl; aryl, including phenyl or tolyl; and substituted alkyl including 3,3,3-trifluoropropyl or 3-chloropropyl. The molecular structure of this component is either straight chain or branch-containing straight chain. This component has a viscosity in the range from 100 to 500,000 mPa·s at 25°C for the following reasons: obtaining good rubber properties becomes highly problematic at a viscosity below 100 mPa·s, while a viscosity in excess of 500,000 mPa·s results in a poor extrudability and poor fluidity by our silicone rubber base.

The electrically conductive inorganic filler with specific surface of at least 0.5 m²/g used as component (B) in the present invention is employed to impart color or electrical conductivity to our silicone rubber base. Component (B) is preferably conductive carbon black, and is specifically exemplified by conductive furnace (CF) blacks, superconductive furnace (SCF) blacks, extraconductive furnace (XCF) blacks, conductive channel (CC) blacks, graphite, and furnace or channel blacks that have been heated to 1,500°C. Metal powders are also useful for component (B) and are exemplified by gold, silver, and nickel. Component (B) is admixed at from 0.1 to 700 weight parts per 100 weight parts of component (A). The use of less than 0.1 weight part results in an inadequate conductivity, while the use of more than 700 weight parts causes our liquid silicone rubber base to have an excessively high viscosity and impaired handling characteristics..

In addition, the combined amount of components (B) and (C) is from 5 to 700 weight parts for the following reasons: the post-cure mechanical strength is low at less than weight parts, and exceeding 700 weight parts causes an excessively high viscosity and impaired handling characteristics. When component (B) is conductive filler with a specific surface area greater than 10 m²/g, such as carbon black, the preferred addition of this component is from 0.1 to 50 weight parts. When this component is a conductive filler with of at least 10 m²/g, the use of more than 50 weight parts also causes our silicone rubber base to have an excessively high viscosity and impaired handling characteristics. When component (B) is clearly less than 10 m²/g, such as metal powder, the preferred addition is from 100 to 700 weight parts.

The following ingredients can also be added on an optional basis: plasticizers such as silanol-functional diorganosiloxane oligomer or hexaorganodisilazane; addition-reaction inhibitors; heat stabilizers; colorants; adhesion promoters; and nonreactive silicone oils.

The electrically nonconductive inorganic filler used as component (C) imparts consistency and body to our silicone rubber base. It also provides composition mechanical strength to the cured product of our silicone rubber composition base. The filler is selected from fumed silica or dry-process silica precipitated silica or wet-process silica a treated fumed or precipitated silica after surface hydrophobicization with an organochlorosilane, such as dimethyldichlorosilane or trimethylchlorosilane, an organosiloxane oligomer, such as octamethylcyclotetrasiloxane or silanol-endblocked dimethylsiloxane oligomer; or hexamethyldisilazane; silica aerogel; calcium carbonate; magnesium carbonate; quartz; diatomaceous earth; and magnesium oxide. Reinforcing silicas with a specific surface of at least 50 m²/g are preferred because they result in a good dispersion for the conductive filler (B). Component (C) is optionally admixed at from 0 to 200, preferably from 1 to 150, and more preferably from 5 to 60 weight parts, in each case per 100 weight parts of component (A). The use of more than 200 weight parts of component (C) causes our silicone rubber base to have an excessively high viscosity and impaired handling characteristics.

The silicone rubber base of our invention is converted into silicone rubber by combining the base with polyorganohydrogensiloxane and platinum catalyst. This combination is followed by curing wherein the mixture is held at room temperature for an extended period of time or by heating. The base can also be converted into silicone rubber by combining it with organoperoxide and heating to effect cure.

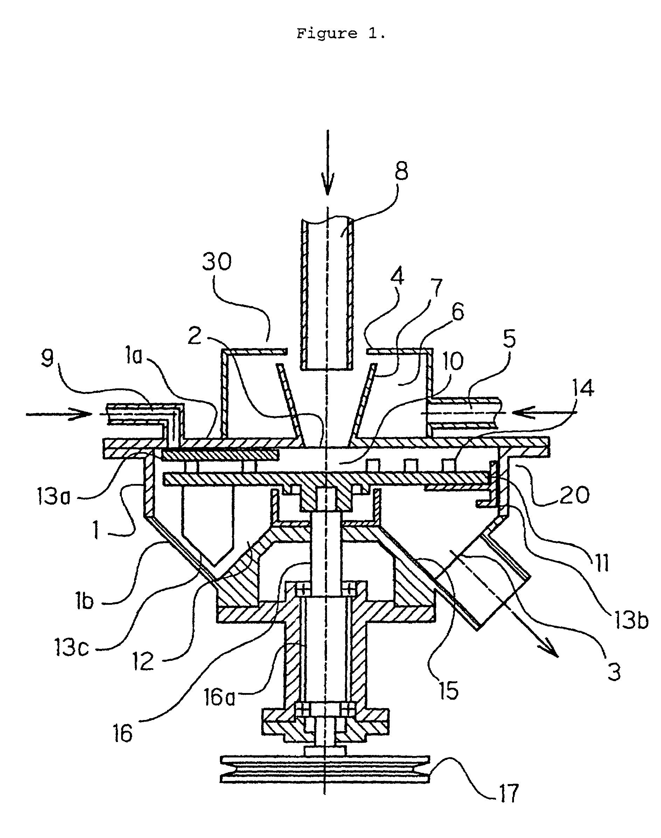

In a preferred embodiment of the present invention, components (A) and (B) or components (A) to (C), are continuously supplied in their respectively quantities into a continuous mixing apparatus. This device is provided with a material feed opening at the top of a cylindrical body casing, a discharge outlet at the bottom of said casing, and a rotating disk within the casing. Therein, these components are mixed in their respectively quantities, at 50 to 300°C by rotation of said disk. The continuous mixer depicted in Figure 1 is preferably used for this operation.

### BRIEF DESCRIPTION OF THE DRAWING

Figure 1 contains a cross section of the continuous mixing device used in the working examples of the present invention.

| Reference | Numerical key | |
|---|---|---|
| | 1 | cylindrical body casing |
| | 1a | upper plate |
| | 1b | inclined surface |
| | 2 | feed opening |
| | 3 | discharge outlet |
| | 4 | cylindircal feed section casing |
| | 5 | feed line |
| | 6 | reservoir |
| | 7 | overflow tube |
| | 8 | feed conduit |
| | 9 | additive feed line |
| | 10 | upper mixing compartment |
| | 11 | rotating disk |
| | 12 | lower mixing compartment |
| | 13a, 13b, 13c | scrapers |
| | 14 | mixing pins |
| | 15 | conical element |
| | 16 | rotating axle |
| | 16a | bearing element |
| | 17 | pulley |
| | 20 | mixer body |
| | 30 | starting (material) feed section |

In Figure 1, (20) refers to the mixer body and (30) refers to the material feed section for the mixer. A cylindrical body casing (1) forms the outer shell of mixer body (20), and a feed opening (2) receives a feed mixture that is provided at the center of the upper plate (1a) of this body casing. The lower part of the body casing forms an inclined surface (1b) having the shape of an inverted cone, and discharge outlet (3) is installed in said inclined surface (1b). A conical element (15) is provided at the center of the casing bottom so as to form an annular V-shaped bottom with inclined surface (1b).

A cylindrical feed section casing (4) forms the outer shell of the starting material feed section (30). A feed line (5) is connected tangentially at the side of this feed section casing, and reservoir (6) is formed within the feed section casing. An overflow tube (7) having the shape of an inverted cone is connected on the top of feed opening (2) on mixer body (20). This overflow tube (7) ascends vertically into reservoir (6). The lower end of feed conduit (8) faces the inlet to overflow tube (7).

The polyorganosiloxane (A) is fed into the material feed section (30) through feed line (5) while the fillers are introduced from feed conduit (8). The polyorganosiloxane supplied by feed line (5) is first stored in reservoir (6), and then it flows down the inner wall of overflow tube (7) from the top edge. At this point, the filler supplied through feed conduit (8) is mixed into said polyorganosiloxane and next descends into feed opening (2).

A rotating disk (11) is installed horizontally within the body casing (1) of mixer body (20) to face feed opening (2). This rotating disk (11) divides the casing interior into an upper mixing compartment (10), where a first-stage mixing operation is implemented, and a lower mixing compartment (12), where a second-stage mixing operation is implemented. The center of rotation of this rotating disk (11) is fixed on the upper end of a rotating axle (16). Said rotating axle (16) is supported by a bearing element (16a) and extends to the exterior of casing (1). A pulley (17) is fixed at the bottom end of rotating axle (16), and the power for rotation is input from an electric motor (not shown). The preferred range for rotation is from 400 to 3,000 rpm based on considerations of the quality of the conductive filler dispersion. When the conductive filler is at least 10 m²/g, the preferred range is 400 to 1,500 rpm. An additive feed line (9) is provided in upper plate (1a), and this feed line (9) opens into the upper mixing compartment (10). Said additive feed line (9) is not required when no additive is used.

The upper surface, outside edge, and lower surface of rotating disk (11) each carry three scrapers as (13a), (13b) and (13c). These scrapers are separated by equal angles typically the mixture is mixed through both the stirring action of said rotating disk, or the stirring and scraping actions of these scrapers. Mixing proceeds as follows: the scrapers (13a) in the upper mixing compartment (10) scrape off the mixture adhering to the upper plate (1a); the scrapers (13b) scrape off the mixture adhering on the inner wall of the casing at the boundary between the upper mixing compartment (10) and the lower mixing compartment (12); and the scrapers (13c) in the lower mixing compartment (12) scrape off the mixture adhering on the inclined surface (1b) of the casing bottom.

The ratio of the diameter of the rotating disk (11) to the inside diameter of the cylindrical body casing (1) is particularly important to the quality of the dispersion of component (B), and values from 0.8 to 0.95, (preferably from 0.85 to 0.9) are required herein. A ratio of less than 0.8 will produce deficient dispersion due to a "short pass" by the mixture and a ratio above 0.95 does produce dispersion, but does not permit transfer of the mixture into the lower mixing compartment (12).

The mixer need not have 3 scrapers in each set (13a), (13b), and (13c). One or more scraper in each set may be employed. Moreover, the scraper sets may all contain the same number of scrapers or may contain different numbers of scrapers. Alternatively, and the scrapers (13b) on the outer edge of rotating disk (11) may even be omitted as desired. The upper surface of rotating disk (11) may also bear a large number of vertical mixing pins (14), which through their stirring activity further promote homogeneity. A conforming jacket may be provided for purposes of temperature control over the outer surface of the cylindrical body casing (1) of the mixer body (20).

In the above apparatus, the polyorganosiloxane/filler mixture entering the upper mixing compartment (10) from the feed opening (2) is subjected, while being radially transported outward on the rotating disk (11), to the first-stage mixing process based on stirring and scraping by the scrapers (13a) and mixing pins (14). The mixture that has been mixed in the first-stage mixing process is then subjected to the second-stage mixing process based on shear between the circumference of the rotating disk (11) and the interior wall of the cylindrical body casing (1) combined with stirring and scraping by the scrapers (13b).

The mixture that has been transported to the lower mixing compartment (12) then descends onto the inclined surface (1b) and is sheared while being scraped by the ends of the scrapers (13c). The resulting additional dispersion of fillers induces a further lowering of the apparent viscosity of the mixture. The mixture is then discharged through the discharge outlet (3). Considerations of the quality of the dispersion make it preferable for the polyorganosiloxane/filler mixture in the lower mixing compartment (12) to reach a temperature from 30 to 300°C. When component (B) is a metal powder that has a melting point, this temperature is lower than the melting point. Even when the blending ratio for component (B) is below 5 weight parts, a uniform dispersion into component (A) can be induced without the formation of small lumps or clumps.

### EXAMPLES

The invention is further explained in detail through working examples. The values reported for the viscosity, electrical resistance, and rubber properties therein were measured at 25°C.

To measure rubber properties, 100 weight parts of defoamed, silicone rubber base were combined with two weight parts of polymethylhydrogensiloxane, having a viscosity of 7.0 mPa·s and a silicon-bonded hydrogen content of 0.75 weight percent, and a chloroplatinic acid-tetramethyldivinyldisiloxane complex at the rate of 15 ppm as platinum metal based upon the polyorganosiloxane. This composition was cured at 150°C for 10 minutes, and the properties of the resulting rubber were measured by the methods of JIS K 6301. The electrical resistance was measured by introducing the uncured composition between plate electrodes (1 mm).

The quality of the dispersion of carbon black or metal powder within the above composition was visually evaluated on a thin film thereof spread on a transparent polyester film.

The post-cure rubber properties and volume resistivity of the above cured composition were also evaluated by using JIS K 6301 and C 2123.

### EXAMPLE 1

35 weight parts of wet-process silica with specific surface of 230 m²/g and 1.0 weight part of acetylene black with specific surface of 60 m²/g were continuously fed from powder feed conduit (8) into the overflow tube (7) of the continuous mixer of Figure 1. The diameter of rotating disk (11) was 300 mm, and the ratio of the diameter of rotating disk (11) to the interior diameter of said casing (1) was 0.90. At the same time, 100 weight parts of vinyl-endblocked polydimethylsiloxane, with vinyl content of 0.23 weight percent and viscosity of 4,000 mPa·s was continuously fed to reservoir (6) from feed line (5). These starting materials passed through feed opening (2), descended onto the rotating disk (11), and were mixed at 200°C by continuous rotation of rotating disk (11) at 900 rpm. The mixture was continuously discharged to the outside through discharge outlet (3). The properties of the resulting silicone rubber base were measured and are reported in Table 1.

### COMPARATIVE EXAMPLE 1

A silicone rubber base was prepared similarly to Example 1, but using a continuous mixer in which the diameter of the rotating disk was 230 mm and the ratio of the diameter of the rotating disk (11) to the interior diameter of casing (1) was 0.70. The properties of the resulting base were also measured as above (not of this invention) and are given in Table 1.

**Table 1**

| | Properties | |
|---|---|---|
| | Example 1 | Comparative Example 1 |
| pre-cure | | |
| appearance | black | black |
| quality of the carbon black dispersion | extremely good: small lumps were completely absent | poor: small lumps were present |
| viscosity | 250 Pa·s | 248 Pa·s |

| post-cure | | |
|---|---|---|
| durometer | 41 | 41 |
| tensile strength (kgf/cm²) | 50 | 50 |
| | 365 | 360 |
| elongation | (%) 12 | 12 |
| tear strength (kgf/cm) | | |

### EXAMPLE 2

A mixture of 10 weight parts of wet-process silica with specific surface of 230 m²/g, 12 weight parts of acetylene black with specific surface of 60 m²/g, and 40 weight parts of quartz of average particle size of 5 micro-meter-s, was continuously fed from feed conduit (8) into the overflow tube (7) of a continuous mixer according to Figure 1 where the diameter of rotating disk (11) was 300 mm, the ratio of the diameter of rotating disk (11) to the interior diameter of casing (1) was 0.90. At the same time, 100 weight parts of vinyl-endblocked polydimethylsiloxane with vinyl content of 0.23 weight percent, and viscosity of 4,000 mPa·s, were continuously fed to reservoir (6) from feed line (5) and 3.0 weight parts of hydroxyl-endblocked polydimethylsiloxane with viscosity of 50 mPa·s, were continuously fed into the upper mixing compartment (10) from additive feed line (9). Mixing was effected at 80°C by continuous rotation of rotating disk (11) at 1,200 rpm. The mixture was continuously discharged to the outside through discharge outlet (3). The properties of the resulting electrically conductive silicone rubber base were measured and are reported in Table 2.

**Table 2**

| | Properties |
|---|---|
| pre-cure | |
| appearance | |
| quality of the carbon black dispersion | black |
| viscosity | extremely good: small lumps were completely absent |
| electrical resistance (MΩ) | |
| | 40 Pa·s |
| | 0.05 |

| post-cure | |
|---|---|
| specific gravity | 1.29 |
| durometer | 40 |

### EXAMPLE 3

8 weight parts of acetylene black with specific surface of 60 m²/g were continuously fed from the feed conduit (8) of a continuous mixer (1) as used in Example 1. At the same time, 100 weight parts of vinyl-endblocked polydimethylsiloxane with vinyl content of 0.13 weight percent and a viscosity of 40,000 mPa·s were continuously fed from feed line (5). Mixing was effected at 250°C by continuous rotation of the rotating disk (11) at 900 rpm. The various properties of the resulting electrically conductive silicone rubber base were measured and are reported in Table 3.

**Table 3**

| | Properties |
|---|---|
| properties before curing | |
| quality of the carbon black dispersion | good: there were no small lumps |
| apparent viscosity | 100 Pa·s |
| electrical resistance (MΩ) | 5,000 |

| post-cure properties | |
|---|---|
| specific gravity | 1.00 |
| durometer | 10 |
| tensile strength (kgf/cm²) | 10 |
| elongation (%) | 500 |

### EXAMPLE 4

550 weight parts of silver with specific surface of 1.0 m²/g were continuously fed from feed conduit (8) of a continuous mixer (1) as used in Example 1. At the same time, 100 weight parts of vinyl-endblocked polydimethylsiloxane with vinyl content of 0.23 weight percent and viscosity of 4,000 mPa·s were continuously fed from feed line (5). Mixing was effected at 40°C by continuous rotation of rotating disk (11) at 900 rpm. The properties of the resulting electrically conductive silicone rubber base were measured and are reported in Table 4. The post-cure volume resistivity was measured by the four-point probe method.

### COMPARATIVE EXAMPLE 2

100 weight parts of vinyl-endblocked polydimethylsiloxane, with vinyl content of 0.23 weight percent and viscosity of 4,000 mPa·s, were placed in a planetary mixer with a rotation ratio of 1.0 to 1.5. Then 550 weight parts of silver, with specific surface area of 1.0 m²/g, were then continuously fed into the mixer while mixing. Mixing was continued for an additional 30 minutes. The resulting mixture was not truly considered a silicone rubber base because silver was present in the undesireable form of nonhomogeneous lumps. The properties of this product were measured and are reported in Table 4.

**Table 4.**

| | Properties | |
|---|---|---|
| | Example 4 | Comparative Example 2 |
| pre-cure | | |
| quality of the silver dispersion | good: aggregates were not present | poor: unmixed powder lumps were present |
| viscosity | 30 Pa·s | could not be measured |

| post-cure | | |
|---|---|---|
| volume resistivity | 7 × 10⁻⁴ (Ω-cm) | could not be measured due to the impossibility of sheet fabrication |

The preparative method of the present invention can very rapidly produce liquid silicone rubber base in which electrically conductive fillers, with a surface of at least 0.5 m²/g, will be homogeneously dispersed in organopolysiloxane without formation of undesirable lumps or clumps.

## Claims

1. A method for the continuous preparation of silicone rubber base, comprising:
continuously supplying to a continuous mixing apparatus
(A) 100 weight parts of polyorganosiloxane that has a viscosity at 25°C of 100 to 500,000 mPa·s comprising at least two silicon-bonded alkenyl groups per molecule,
(B) 0.1 to 700 weight parts of electrically conductive inorganic filler with a specific surface area of at least 0.5 m²/g,
where the combined quantity of components (B) and (C) is from 5 to 700 weight parts and
(C) 0 to 200 weight parts of electrically nonconductive inorganic filler,
wherein the continuous mixing apparatus comprises a cylindrical body casing having a material feed opening at the top of said casing, a mixture discharge outlet at the bottom of said casing, a rotating disk within the casing where the ratio of the diameter of the rotating disk to the inside diameter of said casing is 0.80 to 0.95;
mixing components (A) through (C) therein by rotation of said disk to form a mixture; and
discharging said mixture through said discharge outlet.

2. The method of Claim 1 in which the polyorganosiloxane is polydiorganosiloxane, component (C) is reinforcing silica, and component (B) is carbon black.

3. The method of claim 1 where components (A) through (C) are mixed at a temperature of 30 to 300°C.

4. The method of claim 2 where component (B) is a metal powder and components (A) through (C) are mixed below the melting point of the metal powder.

5. The method of claim 1 where the rotating disk rotates at a speed between 400 and 3000 rpm.

## Patentansprüche

1. Verfahren zur kontinuierlichen Herstellung eines Siliconkautschukgrundmaterials, umfassend:
kontinuierliches Zuführen zu einer kontinuierlichen Mischvorrichtung von
(A) 100 Gewichtsteilen eines Polyorganosiloxans, das eine Viskosität bei 25°C von 100 bis 500.000 mPa·s aufweist und wenigstens zwei an Silicium gebundene Alkenylgruppen pro Molekül enthält,
(B) 0,1 bis 700 Gewichtsteilen eines elektrisch leitenden anorganischen Füllstoffs mit einer spezifischen Oberfläche von wenigstens 0.5 m²/g, wobei die vereinigte Menge der Komponenten (B) und (C) 5 bis 700 Gewichtsteile beträgt, und
(C) 0 bis 200 Gewichtsteilen eines elektrisch nichtleitenden anorganischen Füllstoffs,
wobei die kontinuierliche Mischvorrichtung ein zylindrisches Gehäuse mit einer Materialzuführöffnung am oberen Ende dieses Gehäuses, eine Auslassöffnung für die Mischung am Boden dieses Gehäuses, eine rotierende Scheibe innerhalb des Gehäuses aufweist, wobei das Verhältnis des Durchmessers der rotierenden Scheibe zu dem Innendurchmesser dieses Gehäuses 0,80 bis 0,95 beträgt,
Mischen der Komponenten (A) bis (C) darin durch Rotation dieser Scheibe, um eine Mischung auszubilden, und
Austragen dieser Mischung durch diese Auslassöffnung.

2. Verfahren nach Anspruch 1, bei dem das Polyorganosiloxan Polydiorganosiloxan ist, Komponente (C) ein verstärkendes Siliciumdioxid und Komponente (B) Russ ist.

3. Verfahren nach Anspruch 1, wobei Komponenten (A) bis (C) bei einer Temperatur von 30 bis 300°C gemischt werden.

4. Verfahren nach Anspruch 2, wobei Komponente (B) ein Metallpulver ist und Komponenten (A) bis (C) unterhalb des Schmelzpunkts des Metallpulvers gemischt werden.

5. Verfahren nach Anspruch 1, wobei die rotierende Scheibe mit einer Geschwindigkeit zwischen 400 und 3000 U/min rotiert.

## Revendications

1. Procédé pour la préparation continue de base de caoutchouc de silicone comprenant:
l'introduction continue dans un appareil de mélange continu
(A) de 100 parties en poids de polyorganosiloxane qui présente une viscosité à 25°C de 100 à 500 000 mPa·s comprenant au moins deux groupes alcényle silicium-liés par molécule,
(B) de 0,1 à 700 parties en poids de charge inorganique électroconductrice avec une surface spécifique d'au moins 0,5 m²/g, dans lequel la quantité combinée des constituants (B) et (C) est comprise entre 5 et 700 parties en poids et
(C) de 0 à 200 parties en poids de charge inorganique non électroconductrice,
dans lequel l'appareil de mélange continu comprend un boîtier de corps cylindrique ayant une ouverture pour l'alimentation en matière en haut dudit boîtier, une sortie d'évacuation du mélange au fond dudit boîtier, un disque rotatif à l'intérieur du boîtier où le rapport du diamètre du disque rotatif au diamètre interne dudit boîtier est compris entre 0,80 et 0,95 ;
le mélange des constituants (A) à (C) dans celui-ci par la rotation dudit disque pour former un mélange ; et
l'évacuation dudit mélange par l'intermédiaire de ladite sortie d'évacuation.

2. Procédé selon la revendication 1, dans lequel le polyorganosiloxane est un polydiorganosiloxane, le constituant (C) est de la silice de renforcement et le constituant (B) est du noir de carbone.

3. Procédé selon la revendication 1, dans lequel les constituants (A) à (C) sont mélangés à une température de 30 à 300°C.

4. Procédé selon la revendication 2, dans lequel le constituant (B) est une poudre de métal et les constituants (A) à (C) sont mélangés sous le point de fusion de la poudre de métal.

5. Procédé selon la revendication 1, dans lequel le disque rotatif tourne à une vitesse comprise entre 400 et 3 000 tr/min.
